# DEMANDE DE BREVET EUROPEEN

(11) **EP 0 930 205 A1**
(43) Date de publication de la demande: **21.07.1999**
(21) Numéro de dépôt: 98123486.7
(22) Date de dépôt: 14.12.1998
(51) Int. Cl.: B60S 1/34, F16C 11/06

(54) **Essuie-glace de véhicule automobile comportant des moyens de commande de l'orientation de la lame d'essuyage.**

(30) Priorité: 15.12.1997 FR 9715982
(71) Demandeur: PAUL JOURNEE S.A., F-60240 Reilly (FR)
(72) Inventeur: Peigneguy, Stéphane, 60240 Reilly (FR)
(74) Mandataire: Gamonal, Didier

(57) **Abrégé**

L'invention propose un essuie-glace (20) de véhicule automobile, du type comportant une tête d'entraînement (28) qui est entraînée et guidée en rotation, alternée, entre deux positions angulaires extrêmes opposées d'inversion du sens de rotation, par deux bielles (20A-26A, 20B-26B), dont l'une au moins est motrice, et qui porte un bras d'essuie-glace (30) d'orientation générale longitudinale qui est monté articulé sur la tête d'entraînement (28) autour d'un axe transversal (T-T) sensiblement paralléle au plan dans lequel se déplacent les deux bielles (20A, 20B), et du type dans lequel une extrémité (26A, 26B) de chacune des deux bielles est articulée sur la tête d'entraînement (28) autour d'un axe (VA, VB) sensiblement perpendiculaire au plan dans lequel se déplacent les deux bielles, caractérisé en ce que, pour faire pivoter le bras d'essuie-glace (30) autour d'un axe longitudinal, la tête d'entraînemènt (28) est montée pivotante, par rapport aux extrémités (26A, 26B) des deux bielles, autour d'un axe de pivotement (L-L) sensiblement perpendiculaire et concourant aux axes (VA, VB) d'articulation des extrémités (26A, 26B) des deux bielles sur la tête d'entraînement.

## Description

La présente invention concerne un essuie-glace de véhicule automobile.

L'invention concerne plus particulièrement un essuie-glace du type comportant une tête d'entraînement qui est entraînée en rotation alternée entre deux positions angulaires extrêmes opposées d'inversion du sens de rotation, par deux bielles, dont l'une au moins est motrice, et qui porte un bras d'essuie-glace d'orientation générale longitudinale qui est monté articulé sur la tête d'entraînement autour d'un axe transversal sensiblement parallèle au plan dans lequel se déplacent les deux bielles, et du type dans lequel une extrémité de chacune des deux bielles est articulée sur la tête d'entraînement autour d'un axe sensiblement perpendiculaire au plan dans lequel se déplacent les deux bielles.

Le bras d'essuie-glace porte, à son extrémité libre opposée à celle par laquelle il est articulé sur la tête d'entraînement, un balai d'essuie-glace qui porte une raclette d'essuyage dont la partie active est une lame longitudinale souple qui coopère avec la surface de la vitre à essuyer, notamment avec la surface du pare-brise.

Afin d'assurer un essuyage efficace de la vitre, tout en évitant les phénomènes de broutement générateurs de bruits nuisibles, il est souhaitable que la partie active de la lame d'essuyage, et notamment son bord d'attaque de la vitre, s'étende dans un plan faisant une inclinaison déterminée par rapport au plan général de la vitre à essuyer.

Du fait de l'inversion du sens de rotation à chacune des extrémités opposées du cycle de balayage alterné, il est nécessaire que l'angle déterminé d'inclinaison de la lame d'essuyage puisse s'inverser par rapport à un plan médian sensiblement perpendiculaire au plan de la vitre à essuyer.

Afin d'obtenir une telle inversion, il est connu de réaliser la raclette d'essuyage avec un talon supérieur porté par une structure articulée du balai d'essuie-glace et une lame inférieure d'essuyage qui est reliée au talon par une bande longitudinale mince formant charnière.

La capacité de déformation du film ou bande de liaison formant charnière, pour permettre l'inversion de l'inclinaison de la partie active de la lame d'essuyage, peut toutefois s'avérer insuffisante dans certaines applications et notamment lorsque l'effort d'essuyage appliqué à la raclette d'essuyage par l'intermédiaire de la structure articulée du balai et du bras d'essuie-glace est très importante.

La présente invention a pour objet de proposer une nouvelle conception d'un essuie-glace du type mentionné précédemment, dont la conception permet d'effectuer un balayage dit non circulaire, et qui comporte des moyens pour faire varier l'orientation de la lame en fonction de la position qu'occupe le bras d'essuie-glace par rapport au pare-brise le long de sa trajectoire de balayage alterné.

De tels moyens pour faire varier l'orientation de la lame sont en effet souhaitables, notamment dans les cas où le pare-brise à essuyer possède un galbe important de façon à maintenir une orientation sensiblement constante du plan de la lame d'essuyage par rapport au plan de la portion de la vitre à essuyer afin que la position de la lame d'essuyage soit en permanence la plus proche possible de l'inclinaison optimale pour l'efficacité de l'essuyage.

Dans ce but, l'invention propose un essuie-glace du type comportant une tête d'entraînement qui est entraînée et guidée en rotation, alternée, entre deux positions angulaires extrêmes opposées d'inversion du sens de rotation, par deux bielles dont l'une au moins est motrice, et qui porte un bras d'essuie-glace d'orientation générale longitudinale qui est monté articulé sur la tête d'entraînement autour d'un axe transversal sensiblement parallèle au plan dans lequel se déplacent les deux bielles, et du type dans lequel une extrémité de chacune des deux bielles est articulée sur la tête d'entraînement autour d'un axe sensiblement perpendiculaire au plan dans lequel se déplacent les deux bielles, caractérisé en ce que, pour faire pivoter le bras d'essuie-glace autour d'un axe longitudinal, la tête d'entraînement est montée pivotante, par rapport aux extrémités des deux bielles, autour d'un axe de pivotement sensiblement perpendiculaire et concourant aux axes d'articulation des extrémités des deux belles sur la tête d'entraînement.

Selon d'autres caractéristiques de l'invention :
- l'extrémité de chacune des deux bielles est montée articulée sur la tête d'entraînement par un mécanisme d'articulation à au moins deux axes de rotation perpendiculaires et concourants correspondant à l'axe d'articulation de la bielle sur la tête d'entraînement et à l'axe de pivotement de la tête d'entraînement ;
- le mécanisme d'articulation est une articulation du type à rotule dont le centre de rotation correspond à l'intersection de l'axe d'articulation de la bielle sur la tête d'entraînement avec l'axe de pivotement de la tête d'entraînement ;
- les mouvements de pivotement de la tête d'entraînement sont commandés par un mécanisme à came intervenant entre la tête d'entraînement et l'une des belles ;
- le mécanisme de commande à came provoque le passage de l'une à l'autre de deux orientations extrêmes lorsque la tête d'entraînement atteint l'une ou l'autre de ses deux positions angulaires extrêmes opposées ;
- l'une au moins des deux articulations à rotule comporte un boîtier de rotule qui délimite un logement de profil sphérique concave qui reçoit à rotation une tête de rotule en forme de calotte sphérique convexe complémentaire, et le mécanisme de commande à came intervient entre le boîtier de rotule et la tête de rotule ;
- le boîtier de rotule est porté par la tête d'entraînement et la tête de rotule est formé à l'extrémité libre d'un pivot porté par l'une des belles à son extrémité et qui s'étend selon l'axe d'articulation de cette extrémité de la bielle sur la tête d'entraînement ;
- la tête d'entraînement est susceptible de pivoter entre deux orientations extrêmes délimitées par des moyens mécaniques de butée intervenant entre la tête d'entraînement et l'une des bielles ;
- les moyens mécaniques de butée comportent deux surfaces planes de butée agencées en V et portées par la tête d'entraînement et qui sont susceptibles de coopérer alternativement avec une surface plane d'appui formée en vis-à-vis sur l'une des bielles ;
- les surfaces de butée en V sont portées par le boîtier de rotule et la surface d'appui est formée sur la bielle ou sur la tête de rotule ;
- les surfaces de butée en V appartiennent à une rondelle agencée sous la face inférieure du boîtier de rotule et qui est traversée par le pivot qui porte la tête de rotule et qui s'étend depuis une face supérieure de l'extrémité de la belle qui est articulée sur la tête d'entraînement et sur laquelle est formée la surface d'appui ;
- l'essuie-glace comporte des moyens bistables qui maintiennent la tête d'entraînement dans l'une où l'autre desdites deux orientations extrêmes.

D'autres caractéristiques et avantages de l'invention apparaîtront à la lecture de la description détaillée qui suit pour la compréhension de laquelle on se reportera aux dessins annexés dans lesquels ;
- la figure 1 est une vue en perspective éclatée qui représente les principaux composants d'un premier mode de réalisation d'un essuie-glace conforme aux enseignements de l'invention ;
- la figure 2 est une vue schématique en section par un plan vertical passant par la ligne 2-2 de la figure 1 sur laquelle les composants, en position assemblée, sont représentés dans une première position relative correspond à une première position angulaire extrême d'inversion du sens de rotation alternée et à une première orientation extrême de la tête d'entraînement ;
- la figure 3 est une vue similaire à celle de la figure 2 correspondant à la seconde position angulaire extrême d'inversion du sens de rotation alternée et à la seconde orientation extrême de la tête d'entraînement ;
- la figure 4 est une vue de détail illustrant une variante des moyens bistables de maintien de la tête d'entraînement dans une orientation angulaire extrême ;
- la figure 5 est une vue similaire à celle de la figure 2 prise en section par un plan vertical passant par la ligne 5-5 de la figure 1 ;
- la figure 6 est une vue schématique de dessus du boîtier de rotule de la figure 5 ;
- la figure 7 est une vue schématique développée des moyens de commande par cames des mouvements de pivotement de la tête d'entraînement ;
- les figures 8 à 10 sont des vues similaires à celles des figures 5 à 7 sur lesquelles les composants sont illustrés dans la seconde position correspondant à celle illustrée à la figure 3 ;

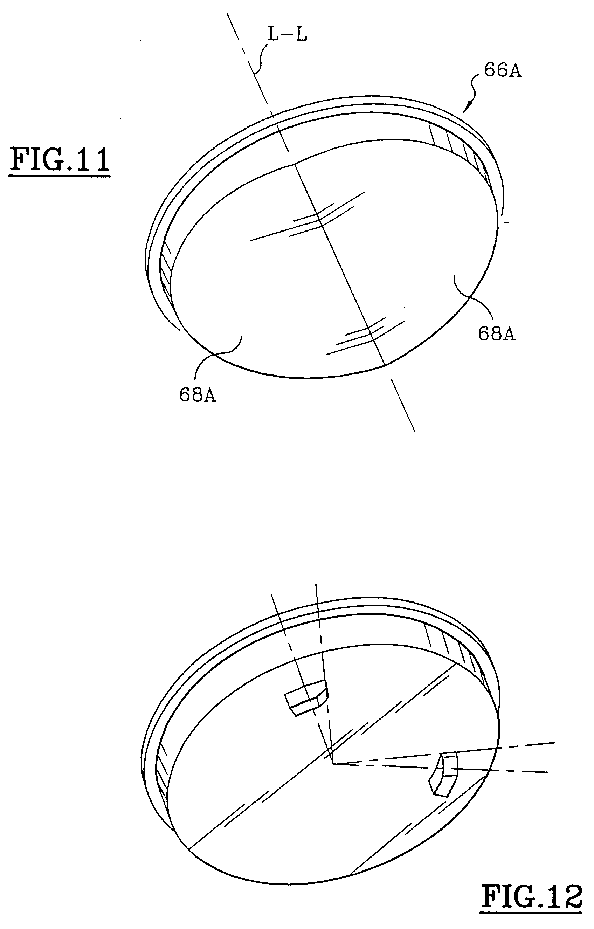

- la figure 11 est une vue schématique en perspective de dessous du couvercle du boîtier de l'articulation à rotule illustrée aux figures 2 et 3 ;
- la figure 12 est une vue schématique en perspective de dessous du couvercle du boîtier de l'articulation à rotule illustrée notamment aux figures 5 et 8 ;
- la figure 13 est une vue similaire à celle de la figure 5 qui illustre une variante de réalisation des moyens de commande par cames ; et
- la figure 14 est une vue schématique en perspective qui illustre le couvercle du boîtier et le pivot de l'articulation à rotule illustré à la figure 13.

Dans la description qui va suivre, les éléments identiques ou similaires, analogues ou équivalents, sont désignés par les mêmes chiffres de référence et les termes "horizontal", "vertical", "avant", "arrière", etc. ne sont utilisés que pour faciliter les explications, notamment en référence aux figures.

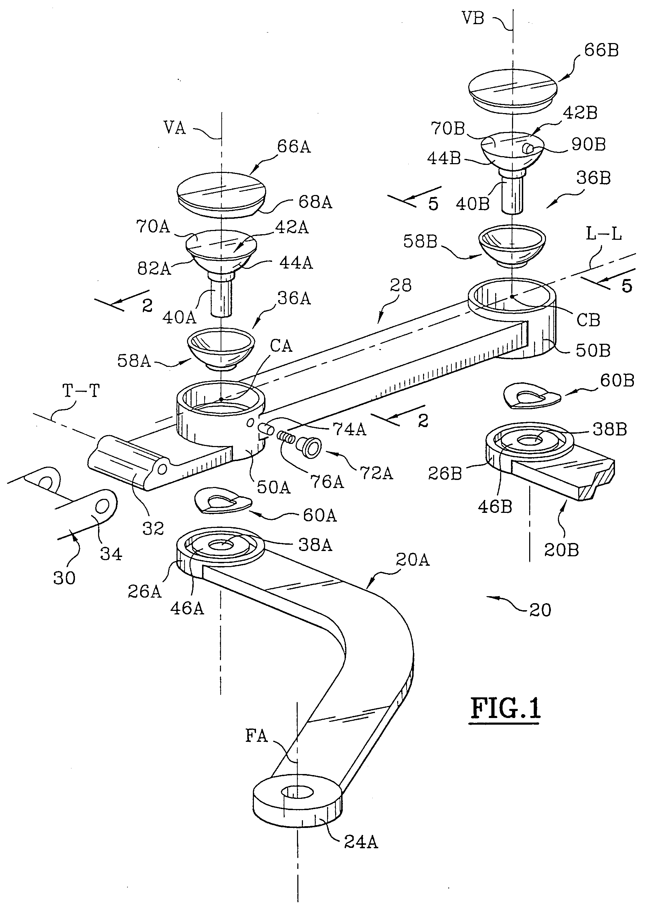

On a représenté schématiquement à la figure 1 les principaux composants d'un essuie-glace 20 à mouvement non circulaire à pantographe qui permet de balayer une zone d'un pare-brise de véhicule (non représenté).

Selon une conception connue, l'essuie-glace 20 à pantographe comporte deux bielles parallèles 20A et 20B dont chacune est montée articulée par rapport à une partie fixe du véhicule (non représentée) et dont l'une est motrice, ici par exemple la bielle 20A.

Chacune des deux bielles est montée articulée sur le véhicule par l'une de ses extrémités 24A, autour d'un axe fixe FA de manière que les deux bielles se déplacent sensiblement dans un même plan perpendiculaire à leurs axes fixes d'articulation par rapport à la structure du véhicule qui sera ici, par convention, considéré comme étant le plan horizontal.

La bielle motrice 20A est entraînée, autour de l'axe FA, dans un mouvement de rotation alternée dans le plan horizontal par une timonerie (non représentée) du mécanisme d'essuie-glace.

Les extrémités libres 26A et 26B des deux belles sont chacune articulées sur une tête 28 d'entraînement d'un bras d'essuie-glace 30 qu'elle porte à son extrémité libre avant 32.

La tête d'entraînement 28 est une pièce de forme générale allongée de direction longitudinale, sensiblement dans le prolongement de la direction longitudinale générale du bras d'essuie-glace 30 dont seule une extrémité libre arrière en forme de chape 34 est illustrée sur la figure, cette extrémité étant montée articulée sur l'extrémité avant 32 de la tête d'entraînement autour d'un axe transversal d'articulation T-T qui est horizontal, c'est-à-dire sensiblement parallèle au plan dans lequel se déplacent les deux bielles 20A et 20B.

Selon une conception connue, afin d'obtenir l'effet d'entraînement à pantographe de la tête 28, chacune des extrémités libres 26A, 26B des deux belles 20A, 20B est montée articulée à rotation sur la tête d'entraînement 28 autour d'un axe d'articulation vertical VA, VB perpendiculaire au plan horizontal dans lequel se déplacent les deux belles.

Conformément aux enseignements de l'invention, la tête d'entraînement 28 comporte des moyens particuliers pour son montage aux extrémités libres 26A et 26B des deux bielles 20A et 20B de manière à faire pivoter le bras d'essuie-glace 30 autour d'un axe longitudinal L-L qui est sensiblement perpendiculaire et concourant aux axes VA, VB d'articulation des extrémités 26A, 26B des deux bielles 20A, 20B sur la tête d'entraînement 28.

Cette conception a pour but de faire varier l'orientation de la tête d'entraînement 28, autour de l'axe L-L, d'un angle de pivotement relativement faible, cette variation d'orientation permettant de faire varier simultanément l'orientation de la lame d'essuyage portée par un balai d'essuie-glace (non représentés sur les figures) qui est lui-même monté articulé à l'extrémité libre avant (non représentée) du bras d'essuie-glace 30.

A cet effet, chacune des extrémités 26A, 26B des deux bielles 20A, 20B est montée articulée sur la tête d'entraînement par des moyens d'articulation à au moins deux axes de rotation perpendiculaires et concourants correspondants à l'axe VA, VB d'articulation de chaque belle 20A, 20B sur la tête d'entraînement 28 et à l'axe L-L de pivotement de la tête d'entraînement 28.

Dans le mode de réalisation qui sera maintenant décrit en détail, ces moyens d'articulation sont des articulations du type à rotule 36A, 36B possédant chacun un centre de rotation CA, CB dont chacun correspond à l'intersection de l'axe VA, VB d'articulation d'une bielle 20A, 20B avec l'axe de pivotement L-L de la tête d'entraînement 28 respectivement.

On décrira maintenant en détail la conception du mécanisme 36A d'articulation à rotule de l'extrémité 26A de la bielle motrice 20A sur la tête d'entraînement 28 et ceci en référence aux figures 1 à 4.

Comme on peut le voir sur ces figures, l'extrémité libre 26A de la bielle motrice 20A comporte un trou central 38A, d'axe VA, qui est traversé par la tige ou queue verticale 40A qui porte à son extrémité supérieure une tête de rotule 42A en forme de calotte sphérique convexe 44A.

La tige 40A est sertie sur l'extrémité libre 26A avec interposition d'une rondelle supérieure plane d'appui 46A et d'une rondelle inférieure 48A, le pivot de rotule constitué par la tige 40A et la tête 42A étant ainsi lié en rotation à l'extrémité 26A de la bielle 20A.

Le boîtier 50A de la rotule 36A est réalisé venu de matière dans le corps de la tête d'entraînement 28, au voisinage de son extrémité libre avant 32 et il comporte notamment un logement 52A de profil concave sphérique, en tronc de sphère, qui se prolonge en direction de la face inférieure 54A par un trou 56A pour le passage de la tige 40A.

Une coupelle de forme complémentaire est interposée entre la surface sphérique convexe 44A et le logement 52A pour faciliter les mouvements d'articulation du boîtier 50A autour du centre CA de la rotule 36A, ce centre étant par conception le point de concours de l'axe VA et de l'axe longitudinal de pivotement L-L.

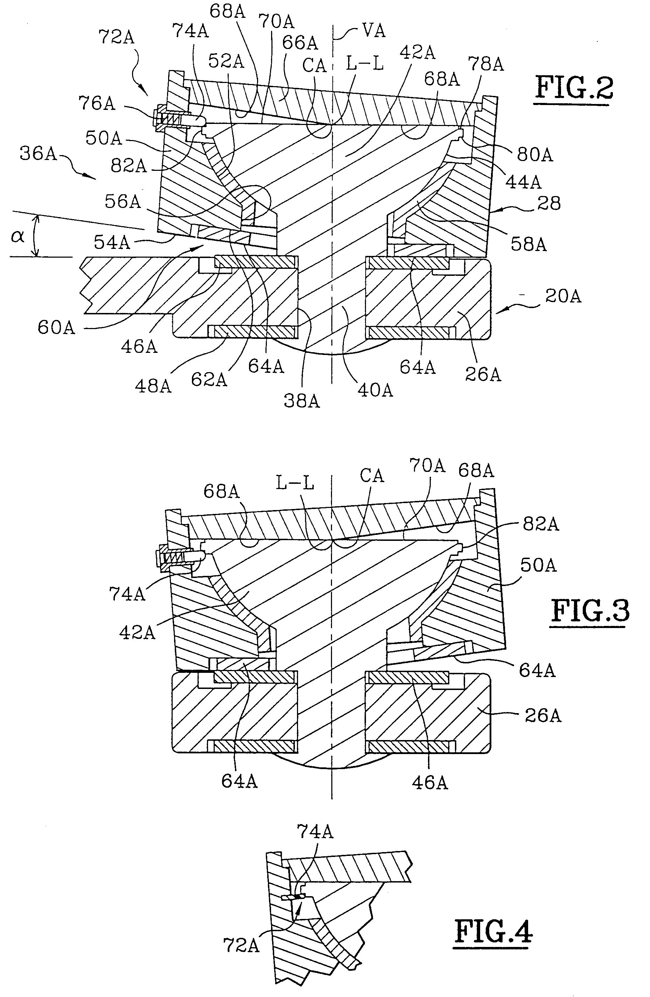

Afin de limiter les possibilités de pivotement du boîtier 50A, et donc de la tête d'entraînement 28, autour de l'axe L-L qui est perpendiculaire au plan de la figure 2, il est prévu des moyens mécaniques de butée au moins sur la rotule 36A.

Dans le mode de réalisation représenté aux figures 1 à 4, ces moyens de butée sont constitués par une rondelle de butée 60A à profil en V ouvert qui est interposée entre la face inférieure 54A du boîtier 50A et la rondelle supérieure d'appui 46A portée par l'extrémité libre 26A de la bielle 20A.

Plus précisément, les deux parties planes 64A, inclinées l'une par rapport à l'autre, de la rondelle 60A forment entre elles un angle aigu α qui est un angle faible, par exemple égal à 8° (voir figure 2).

La rondelle 60A est reçue dans un logement ou lamage 62A formé dans la face inférieure 54A du boîtier 50A et les deux parties de sa face inférieure 64A sont susceptibles de coopérer alternativement avec la face supérieure en vis-à-vis de la rondelle 46A.

Pour compléter ces moyens de butée, le couvercle supérieur 66A de fermeture du boîtier 50A présente une face inférieure à profil en V convexe dont les deux parties 68A sont deux surfaces planes inclinées formant entre elles le même angle aigu α et qui sont susceptibles de coopérer alternativement avec la face supérieure plane 70A de la tête de rotule 42A, cette face plane s'étendant dans un plan perpendiculaire à l'axe VA.

La tête d'entraînement 28 est illustrée à la figure 2 dans une première position correspondant à une orientation angulaire extrême, autour de l'axe L-L, l'autre position extrême étant illustrée à la figure 3 sur laquelle, par rapport à la figure 2, l'ensemble du boîtier 50A a pivoté autour de l'axe L-L (dans le sens anti-horaire) d'un angle égal à 8°, ce pivotement étant bien entendu appliqué de la même manière à la lame d'essuyage par l'intermédiaire du bras d'essuie-glace 30.

Le mouvement de pivotement est rendu possible du fait de la capacité de la rondelle 60A à se déformer élastiquement légèrement et ceci afin de compenser le décalage vertical entre le plan moyen de la rondelle 60A et le centre instantané de rotation CA.

Afin de maintenir le boîtier 50A et donc la tête d'entraînement 28, dans l'une ou l'autre des deux orientations extrêmes illustrées aux figures 2 et 3, il est prévu des moyens bistables de maintien 72A. Ces moyens sont ici constitués par un doigt de maintien 74A escamotable qui est susceptible de coulisser radialement, à l'encontre d'un ressort de compression 76A qui sollicite le doigt 74A en permanence radialement vers l'intérieur.

L'extrémité libre du doigt 74A coopère avec le bord supérieur 78A ou le bord inférieur 80A d'une lèvre périphérique 82A formée au voisinage de la face supérieure 70A de la tête de rotule 42A.

Lors du basculement de l'une à l'autre des deux positions illustrées aux figures 2 et 3, le doigt 74A s'escamote temporairement sous l'action du mouvement de pivotement imparti à la tête d'entraînement 28, par des moyens qui seront décrits par la suite.

Sur la variante de réalisation représentée à la figure 4, les moyens bistables de maintien 72A sont constitués par une patte ou lame 74A qui est déformable élastiquement pour permettre sa coopération alternativement avec l'un ou l'autre des bords 78A ou 80A de la lèvre 82A.

On décrira maintenant la seconde articulation à rotule 36B, notamment en référence aux figures 1 et 5 à 10 sur lesquelles des composants identiques ou similaires ou analogues à ceux décrits pour la première rotule 36A sont désignés par les mêmes chiffres de référence indicés par la lettre B.

La structure de la seconde rotule 36B est globalement identique à celle de la première rotule 36A, c'est-à-dire qu'elle permet elle aussi un pivotement, autour de l'axe L-L, de la tête d'entraînement 28, et donc du boîtier de rotule 50B par rapport au pivot 42B et donc par rapport à la bielle 20B, l'agencement coupé des deux rotules permettant d'une part l'articulation des deux bielles 20A et 20B autour de leurs axes VA et VB, par rapport à la tête d'entraînement 28, et le pivotement de cette dernière autour de l'axe L-L qui est l'axe longitudinal passant en permanence par les centres CA et CB de rotation des deux articulations à rotule 36A et 36B.

Afin de compléter les moyens mécaniques de butée qui déterminent les deux orientations angulaires extrêmes de la tête d'entraînement 28 par rapport au plan des deux bielles 20A et 20B, la partie inférieure du boîtier 50B est ici aussi munie d'une rondelle de butée en V 60B bien qu'une seule rondelle soit suffisante pour constituer des moyens de butée du pivotement angulaire.

La seconde rotule 36B comporte les moyens de commande des mouvements de basculement de la tête d'entraînement 28 en pivotement autour de son axe de pivotement L-L vers l'une ou l'autre des deux orientations angulaires extrêmes.

Ces moyens de commande permettent de déterminer le changement d'orientation angulaire de la tête d'entraînement 28, et donc de la lame d'essuyage, en fonction de la position angulaire relative de balayage, et notamment ici en fonction de la position angulaire relative de l'extrémité 26B de la bielle 20B par rapport à la tête d'entraînement 28, et plus précisément par rapport au boîtier de rotule 50B.

A cet effet, il est prévu des moyens de commande par cames. Ces moyens comportent une came 90B, réalisée sous la forme d'un doigt à profil arrondi qui est formé sur la face supérieure 70B de la tête de rotule 42B et qui est susceptible de coopérer avec l'une ou l'autre de deux cames 92B et 94B formées en vis-à-vis dans la face inférieure 68B du couvercle 66B.

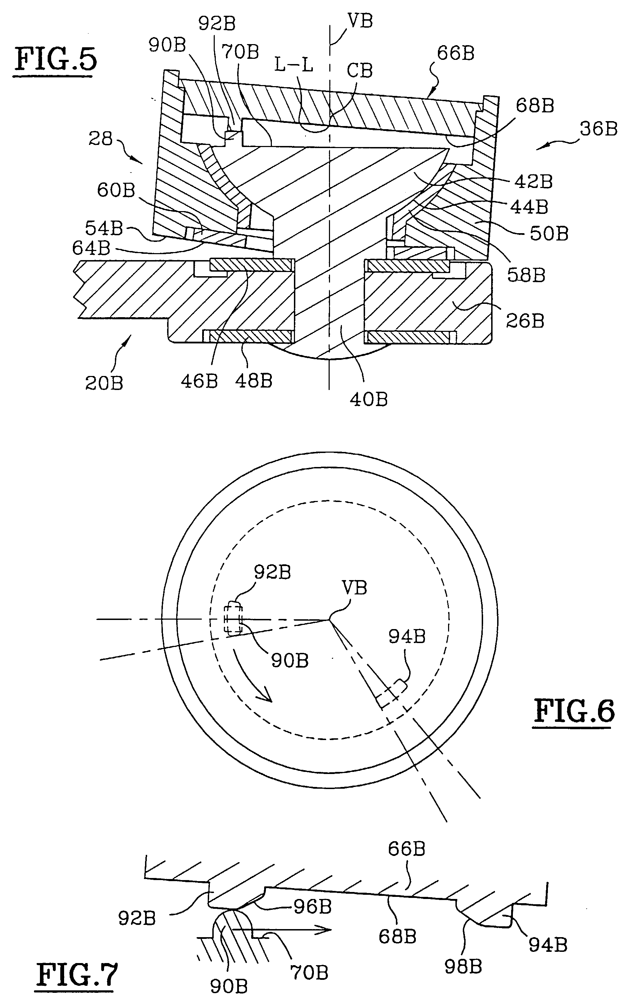

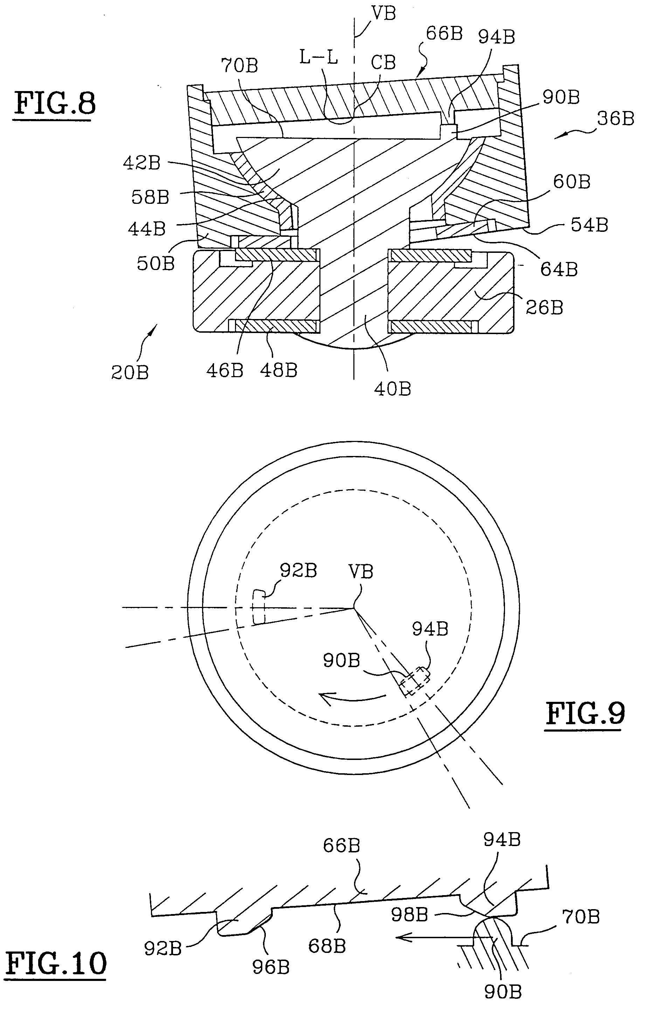

Comme on peut le voir notamment aux figures 6 et 9, le doigt 90B et les deux cames 92B et 94B sont situés sur une même circonférence, les deux cames étant espacées angulairement l'une de l'autre d'un angle correspondant à l'angle maximal de balayage, ou plus précisément à l'angle maximal de rotation relative entre l'extrémité 26B de la bielle 20B et la tête d'entraînement 28 qui est ici égal à environ 110°.

Chacune des cames 92B, 94B comporte une rampe inclinée 96B, 98B qui s'étend sur un angle aigu faible, par exemple d'environ 10°.

On décrira maintenant le mode de fonctionnement des moyens de commande du pivotement notamment en référence aux figures 6 à 10.

Dans la première position angulaire extrême de la belle 20B par rapport à la tête d'entraînement 28, qui est illustrée aux figures 6 à 7, le doigt 90B coopère avec la face inférieure en vis-à-vis de la came 92B déterminant ainsi le pivotement de la tête d'entraînement 28 dans la position illustrèe aux figures 2 et 5 et dans laquelle elle est maintenue par les moyens bistables 72A.

On suppose maintenant, pour faciliter les explications et la représentation, que la tête d'entraînement 28, et donc le boîtier 50B, est fixe en rotation et que c'est la bielle 20B, et donc la tête de rotule 42B, qui tourne autour de l'axe VB dans le sens anti-horaire en considérant la figure 6.

Au début de ce mouvement, le doigt 90B quitte la came 92B mais la tête d'entraînement 28 garde son orientation extrême illustrée à la figure 5 dans laquelle elle est maintenue par les moyens de maintien 72A.

Le doigt 90B se déplace donc angulairement progressivement en direction de la came 94B, c'est-à-dire qu'il se déplace de la gauche vers la droite en considérant la vue développée de la figure 7.

Ce mouvement se poursuit jusqu'à ce que le doigt 90B vienne en contact avec la rampe 98B de la came 94B.

La coopération du doigt 90B avec la rampe 98B se poursuit sur un angle d'environ 10° au cours de laquelle la tête d'entraînement 28 pivote progressivement, autour de l'axe L-L par rapport aux bielles 20A et 20B en escamotant notamment les moyens de maintien 72A pour atteindre la seconde orientation angulaire extrême illustrée aux figures 3 et 8 qui correspond aussi à la seconde position angulaire extrême de la bielle 20B par rapport à la tête d'entraînement 28.

En partant de cette seconde position illustrée aux figures 8 à 10, et après inversion du sens de rotation de la timonerie de commande de la rotation simultanée des deux bielles 20A et 20B, le mouvement peut s'inverser à partir de la position illustrée aux figures 8 à 10, c'est-à-dire que, par convention, la bielle 20B avec son doigt 90B tourne alors dans le sens horaire en considérant la figure 9, le doigt 90B se déplaçant de la droite vers la gauche en considérant la figure 10.

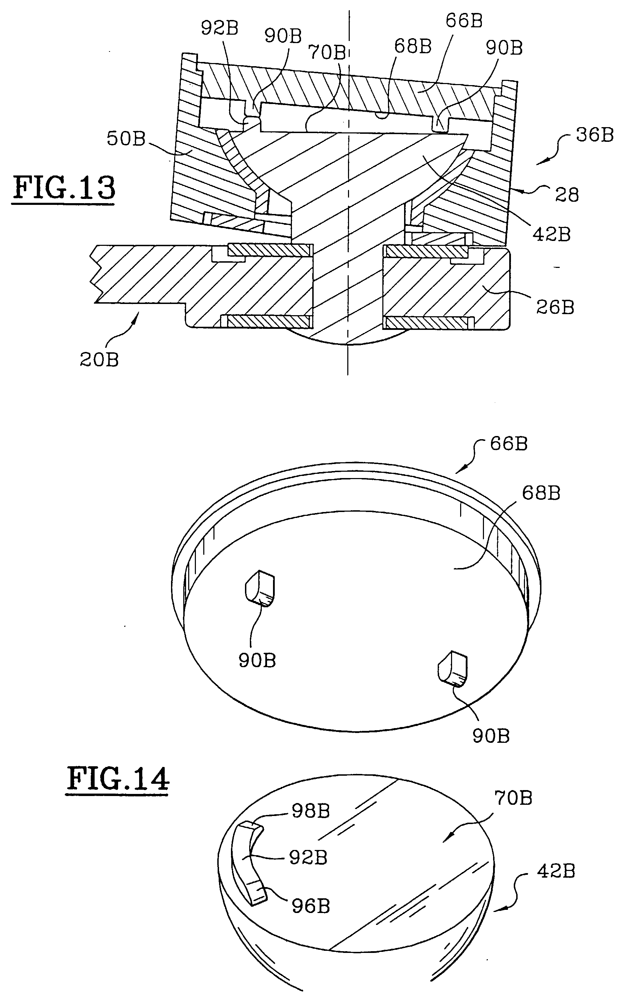

On décrira maintenant la variante de réalisation illustrée aux figures 13 et 14 qui diffère du premier mode de réalisation qui vient d'être décrit uniquement par ses moyens de commande du pivotement qui sont toujours du type à came et d'une conception légèrement différente.

En effet, selon cette conception, la face inférieure 68B du couvercle 66B comporte deux doigts de commande 90B qui sont formés en relief et qui s'étendent verticalement vers le bas en direction de la face supérieure 70B de la tête de rotule 42B qui comporte quant à elle une came 92B dont les deux extrémités opposées comportent des rampes 96B et 98B, le positionnement des doigts 90B et la longueur angulaire de la came 92B étant tels que la coopération de ces éléments détermine le pivotement en fonction de la position angulaire relative de la belle 20B par rapport à la tête d'entraînement 28 comme dans le premier mode de réalisation décrit précédemment.

## Revendications

1. Essuie-glace (20) de véhicule automobile, du type comportant une tête d'entraînement (28) qui est entraînée et guidée en rotation, alternée entre deux positions angulaires extrêmes opposées d'inversion du sens de rotation, par deux bielles (20A-26A, 20B-26B) dont l'une- au moins est motrice, et `qui porte un bras d'essuie-glace (30) d'orientation générale longitudinale qui est monté articulé sur la tête d'entraînement (28) autour d'un axe transversal (T-T) sensiblement parallèle au plan dans lequel se déplacent les deux bielles (20A, 20B), et du type dans lequel une extrémité (26A, 26B) de chacune des deux bielles est articulée sur la tête d'entraînement (28) autour d'un axe (VA, VB) sensiblement perpendiculaire au plan dans lequel se déplacant les deux belles, caractérisé en ce que, pour faire pivoter le bras d'essuie-glace (30) autour d'un axe longitudinal, la tête d'entraînement (28) est montée pivotante, par rapport aux extrémités (26A, 26B) des deux bielles, autour d'un axe de pivotement (L-L) sensiblement perpendiculaire et concourant aux axes, (VA, VB) d'articulation des extrémités (26A, 26B) des deux bielles sur la tête d'entraînement.

2. Essuie-glace selon la revendication 1, caractérisé en ce que l'extrémité (26A, 26B) de chacune des deux bielles est montée articulée sur la tête d'entraînement (28) par un mécanisme d'articulation (36A, 36B) à au moins deux axes de rotation perpendiculaires et concourants correspondant à l'axe (VA, VB) d'articulation de la bielle (26A, 26B) sur la tête d'entraînement (28) et à l'axe (L-L) de pivotement de la tête d'entraînement (28).

3. Essuie-glace selon la revendication 2, caractérisé en ce que le mécanisme d'articulation est une articulation du type à rotule (36A, 36B) dont le centre de rotation (CA, CB) correspond à l'intersection de l'axe (VA, VB) d'articulation de la bielle (26A, 26B) sur la tête d'entraînement (28) avec l'axe (L-L) de pivotement de la tête d'entraînement.

4. Essuie-glace selon l'une quelconque des revendications précédentes, caractérisé en ce que les mouvements de pivotement de la tête d'entraînement (28) sont commandés par un mécanisme à cames (90B, 92B, 94B) intervenant entre la tête d'entraînement (28) et l'une des bielles (26B).

5. Essuie-glace selon la revendication 4, caractérisé en ce que le mécanisme de commande à came provoque le passage de l'une à l'autre de deux orientations extrêmes lorsque la tête d'entraînement (28) atteint l'une ou l'autre de ses deux positions angulaires extrêmes opposées.

6. Essuie-glace selon l'une des revendications 4 ou 5, prise en combinaison avec la revendication 3, caractérisé en ce que l'une au moins (36B) des deux articulations à rotule comporte un boîtier de rotule (50B) qui délimite un logement de profil sphérique concave (52B) qui reçoit à rotation une tête de rotule (42B) en forme de calotte sphérique convexe complémentaire, et en ce que le mécanisme de commande à cames intervient entre le boîtier de rotule (50B, 66B) et la tête de rotule (42B).

7. Essuie-glace selon la revendication 6, caractérisé en ce que le boîtier de rotule (50B) est porté par la tête d'entraînement (28) et la tête de rotule (42B) est formé à l'extrémité libre d'un pivot (40B) porté par l'une des bielles à son extrémité (26B) et qui s'étend selon l'axe (VB) d'articulation de cette extrémité (26B) de la bielle sur la tête d'entraînement (28).

8. Essuie-glace selon la revendication 7, caractérisé en ce que la tête d'entraînement (28) est susceptible de pivoter entre deux orientations extrêmes délimitées par des moyens mécaniques de butée (60A, 60B, 46A, 46B, 68A, 70A) intervenant entre la tête d'entraînement (28) et au moins l'une des bielles (20A, 20B).

9. Essuie-glace selon la revendication 8, caractérisé en ce que les moyens mécaniques de butée comportent deux surfaces planes de butée (64A, 64B, 68A) agencées en Y et portées par la tête d'entraînement (28) et qui sont susceptibles de coopérer alternativement avec une surface plane d'appui (46A, 46B, 70A) formée en vis-à-vis sur l'une des bielles (20A, 20B).

10. Essuie-glace selon la revendication 9 prise en combinaison avec la revendication 7, caractérisé en ce que les surfaces de butée en V sont portées par le boîtier de rotule (50A, 50B), et en ce que la surface d'appui (46A, 46B, 70A) est formée sur la bielle (20A, 20B) ou sur la tête de rotule (42A).

11. Essuie-glace selon la revendication 10, caractérisé en ce que les surfaces de butée en Y (64A, 64B) appartiennent à une rondelle (60A, 60B) agencée sous la face inférieure (54A, 54B) du boîtier de rotule (42A, 42B) et qui est traversée par le pivot (40A, 40B) qui porte la tête de rotule (42A, 42B) et qui s'étend depuis une face supérieure (46A, 46B) de l'extrémité de la bielle qui est articulée sur la tête d'entraînement (28) et sur laquelle est formée la surface d'appui.

12. Essuie-glace selon l'une quelconque des revendications 8 à 11, caractérisé en ce qu'il comporte des moyens bistables (78A) qui maintiennent la tête d'entraînement (28) dans l'une ou l'autre desdites deux orientations extrêmes.
